# EUROPÄISCHE PATENTSCHRIFT

(11) **EP 1 655 247 B1**
(45) Veröffentlichungstag und Bekanntmachung des Hinweises auf die Patenterteilung: **15.04.2009**
(21) Anmeldenummer: 05019279.8
(22) Anmeldetag: 06.09.2005
(51) Int. Cl.: B65G 47/90, B65B 21/12, B65B 21/18, B07C 5/12

(54) **Sortiervorrichtung von Flaschen**
Sorting device for bottles
Dispositif de tri pour bouteilles

(30) Priorität: 05.11.2004 DE 102004053472
(43) Veröffentlichungstag der Anmeldung: 10.05.2006
(73) Patentinhaber: Recop Electronic GmbH, 34123 Kassel-Waldau (DE)
(72) Erfinder: Oppermann, Knut, D-34260 Kaufungen (DE)
(74) Vertreter: Walther, Robert

(56) Entgegenhaltungen:
- EP-A- 0 010 686
- DE-A1- 2 457 961
- DE-B3- 10 244 804
- DE-U1- 29 617 344

## Beschreibung

Die vorliegende Erfindung betrifft eine Sortiervorrichtung zum Sortieren von Flaschen unterschiedlicher Sorte aus Flaschenkästen unterschiedlichen Gefachtyps, z. B. von Kästen mit 20 und 24 Flaschen (20er bzw. 24er Gefachtyp), wobei die Sortiervorrichtung mindestens eine zuführende und mindestens eine abführende Kastenbahn sowie einen Flaschenspeicher umfasst, wobei zum Sortieren von Flaschen unterschiedlicher Sorte eine relativ zu der Kastenbahn bewegliche Packeinrichtung zur Aufnahme und zum Absetzen von Flaschen vorgesehen ist, wobei die Packeinrichtung mindestens zwei unterschiedliche Packköpfe umfasst, wobei jeder Packkopf eine dem Gefachtyp entsprechende Anzahl von Packtulpen aufweist.

Aus der DE 296 17 344 U1 ist eine Umpackvorrichtung bekannt. Diese Umpackvorrichtung umfasst zwei Kastenbahnen mit dazwischen liegendem Flaschentisch. Auf der einen Kastenbahn werden volle Kästen eines Gefachtyps mit einer einzigen Flaschensorte zugeführt. Diese Flaschen sollen in leere Kästen eines anderen Gefachtyps umgepackt werden, die auf der anderen Kastenbahn herangeführt werden. Das Auspacken der Flaschen aus den Kästen des einen Gefachtyps erfolgt durch einen Packkopf des gleichen Gefachtyps. Das Einpacken von dem Packtisch wird durch einen Packkopf vorgenommen, der dem Gefachtyp des Leerkastens entspricht.

Die gebräuchlichsten Flaschenkästen, insbesondere für Bierflaschen, betreffen Kästen mit 20 Flaschen, zumeist ½ Liter-Flaschen oder auch Kästen mit 24 Flaschen, zumeist Flaschen von 0,33 I Inhalt.

Solche Flaschenkästen mit Leergut werden beispielsweise den Brauereien auf Paletten durchaus durchmischt angeliefert. Bislang ist es nun so, dass die Kästen nach Gefachtyp getrennt den einzelnen Sortieranlagen zugeführt werden. Das heißt, dass eine jede Sortieranlage Flaschen aus Kästen eines einzigen Gefachtyps sortiert. Eine solche getrennte Sortierung in Abhängigkeit des jeweiligen Gefachtyps ist auf Grund des Vorhandenseins zweier gesonderter Sortiervorrichtungen und des daraus resultierenden erheblichen Platzbedarfs teuer.

Der Erfindung liegt daher die Aufgabe zu Grunde, eine Sortiervorrichtung der eingangs genannten Art bereitzustellen, mit der Flaschen aus Kästen unterschiedlichen Gefachtyps sortiert werden können.

Die Aufgabe wird erfindungsgemäß dadurch gelöst, dass die Packeinrichtung an einem zumindest zwei Raumrichtungen beweglichen Gestell befestigt ist, das über der Kastenbahn angeordnet ist, wobei von der Packeinrichtung sowohl die Kastenbahnen als auch der Flaschenspeicher erreichbar sind; d. h., dass jeder Packkopf genau über dem zu sortierenden Flaschenkasten ausgerichtet wird. Hieraus wird deutlich, dass ein auf der zuführenden Kastenbahn ankommender Flaschenkasten des 24er Gefachtyps durch den entsprechenden 24er Packkopf sortiert wird. Die Sortierung besteht darin, dass die Fehlflaschen aus dem Kasten entnommen werden, im Flaschenspeicher abgesetzt werden, dem Speicher die Flaschen entnommen werden, die zu der Sorte Flaschen des zu sortierenden Kastens korrelieren, und in diesen Kasten eingesetzt werden. Für den Fall, dass dann nachfolgend ein Flaschenkasten des 20er Gefachtyps einläuft, wird dieser von dem anderen Packkopf zum Zwecke der Sortierung in gleicher Weise bearbeitet.

Das heißt, die Kästen werden nicht parallel, sondern nacheinander bearbeitet, jedoch mit ein- und derselben Packeinrichtung als Bestandteil einer Sortiervorrichtung, jedoch - entsprechend der Kastenart - von dem jeweils passenden Packkopf.

Insbesondere ist vorgesehen, dass die Anordnung der Packtulpen in dem jeweiligen Packkopf zu der Ausgestaltung des Gefachtyps des Flaschenkastens korreliert. Das heißt, dass die Anordnung der Packtulpen mit der Anordnung der Flaschen im Flaschenkasten übereinstimmt. Hieraus wird deutlich, dass der Packkopf passend zu dem jeweiligen Flaschenkasten ausgerichtet wird und dann ohne weitere Bewegung des Packkopfes als solchem die entsprechend ermittelten Fehlflaschen entnommen werden, dem bereits zuvor erwähnten Speicher zugeführt werden, die entsprechenden Flaschen aus dem Speicher entnommen werden, und schlussendlich der Flaschenkasten mit Flaschen einer Sorte zu einem sogenannten sortenreinen Kasten zusammengestellt wird. Der Vorteil der Anordnung der Packtulpen entsprechend dem Gefach des Flaschenkastens besteht darin, dass - wie bereits ausgeführt - eine Justierung des Kopfes über den einzelnen Flaschen, wie das der Fall wäre, wenn beispielsweise von einem 24er Packkopf ein 20er Flaschenkasten sortiert würde, nicht notwendig ist.

Des Weiteren ist im Einzelnen vorgesehen, dass die Packtulpen zur Aufnahme und zum Absetzen der Flaschen einzeln vertikal verfahrbar und auch einzeln ansteuerbar sind. Hieraus wird Folgendes deutlich: Wie bereits an anderer Stelle erörtert, werden die Fehlflaschen aus dem Flaschenkasten in einem Speicher abgesetzt. Da von der Sortiervorrichtung gespeichert ist, welche Flaschen an welcher Stelle im Speicher abgesetzt sind, ist der Packkopf in der Lage, die Packtulpen derart anzusteuern, dass diese nur die entsprechenden Flaschen entnehmen und diese in den zu sortierenden Flaschenkasten auf der Kastenbahnbahn einstellen. Hieraus wird deutlich, dass ein solcher Packkopf, der entsprechend dem Gefachtyp des Flaschenkastens ausgebildet und dessen Packtulpen einzeln ansteuerbar und darüber hinaus auch einzeln verfahrbar sind, beim Sortiervorgang eine erhebliche Zeitersparnis bewirkt.

Das heißt, dass jeder Packkopf genau über dem zu sortierenden Flaschenkasten ausgerichtet wird.

Anhand der Zeichnung wird die Erfindung nachstehend beispielhaft näher erläutert.
- Figur 1: zeigt die Sortiervorrichtung in einer Ansicht von oben;
- Figur 2: zeigt einen Schnitt gemäß der Linie II - II aus Figur 1.

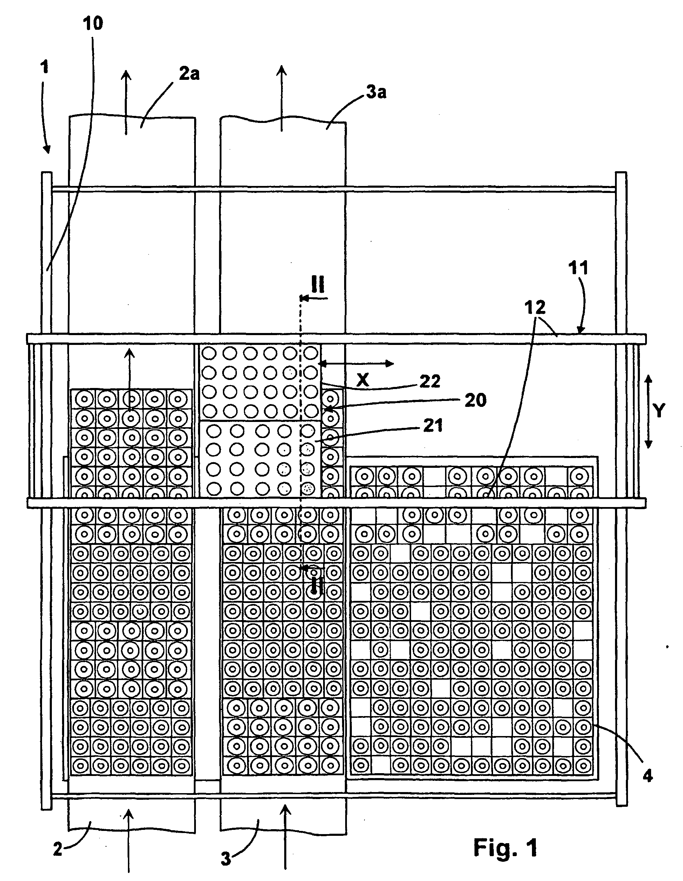

Die in der Figur 1 von oben dargestellte Sortiervorrichtung 1 umfasst im Einzelnen zwei zuführende Kastenbahnen 2 und 3 sowie sich daran anschließend zwei abführende Kastenbahnen 2a, 3a. Auf den zuführenden Kastenbahnen 2, 3 stehen Kästen zwei verschiedenen Gefachtyps auf, nämlich Flaschenkästen des 20er und des 24er Gefachtyps. Grundsätzlich funktionsfähig ist die Erfindung auch mit einer zuführenden und einer abführenden Kastenbahn.

Im Bereich der Kastenbahnen 2, 3 bzw. auch 2a, 3a befindet sich ein Flaschenspeicher 4 zur Aufnahme der Fehlflaschen bzw. auch zur Abgabe der entsprechenden Flaschen in den jeweiligen Flaschenkasten.

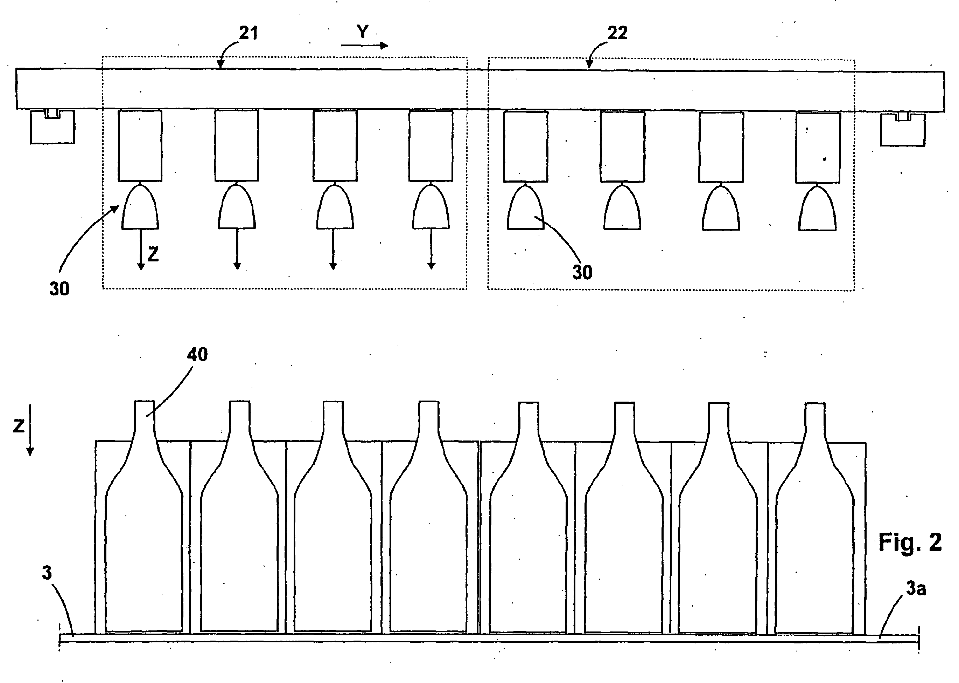

Im Bereich der Kastenbahnen 2, 3 bzw. 2a, 3a und des Flaschenspeichers 4 ist ein Gestell 10 angeordnet. Das Gestell 10 umfasst eine in Richtung des Pfeils Y verfahrbare Traverse 11, die aus zwei miteinander verbundenen Schienen 12 besteht. Durch diese beiden Schienen 12 wird die mit 20 bezeichnete Packeinrichtung aufgenommen. Die Packeinrichtung 20 umfasst im Einzelnen zwei Packköpfe 21, 22, wobei ein jeder Packkopf 21, 22 eine bestimmte Anzahl von Packtulpen 30 aufweist (Figur 2). Die Anzahl der Packtulpen in dem jeweiligen Packkopf 21, 22 korreliert mit dem Typ des Flaschenkastens, der durch diesen Packkopf zum Zwecke der Sortierung bearbeitet wird. Das heißt, es gibt einen Packkopf 21 mit 20 Tulpen und einen Packkopf 22 mit 24 Tulpen. Die insgesamt mit 20 bezeichnete Packeinrichtung, umfassend die beiden Packköpfe 21, 22, ist in Richtung des Pfeils X verfahrbar, so dass von der Packeinrichtung 20 sowohl die Kastenbahnen als auch der Flaschenspeicher erreichbar sind.

Die mit 30 bezeichneten Packtulpen der Packköpfe 21, 22 sind jeweils in vertikaler Richtung entsprechend dem Pfeil Z verfahrbar, um die Flaschen 40 aus den entsprechenden Kästen entnehmen zu können.

## Patentansprüche

1. Sortiervorrichtung zum Sortieren von Flaschen unterschiedlicher Sorte aus Flaschenkästen unterschiedlichen Gefachtyps,
- z. B. von Kästen mit 20 und 24 Flachen (20er bzw. 24er Gefachtyp,
- wobei die Sortiervorrichtung mindestens eine zuführende (2, 3) und mindestens eine abführende Kastenbahn (2a, 3a)
- sowie einen Flaschenspeicher (4) umfasst,
- wobei zum Sortieren von Flaschen unterschiedlicher Sorte eine relativ zu der Kastenbahn bewegliche Packeinrichtung (20) zur Aufnahme und zum Absetzen von Flaschen vorgesehen ist
- wobei die Packeinrichtung (20) mindestens zwei unterschiedliche Packköpfe (21, 22) umfasst,
- wobei jeder Packkopf (21, 22) eine dem Gefachtyp entsprechende Anzahl von Packtulpen (30) aufweist,
**dadurch gekennzeichnet,**
- **dass** die Packeinrichtung (20) an einem zu mindestens zwei Raumrichtungen beweglichen Gestell (10, 11) befestigt ist, das über der Kastenbahn (2, 3) angeordnet ist, wobei von der Packeinrichtung (20) sowohl die Kastenbahnen als auch der Flaschenspeicher erreichbar sind.

2. Sortiervorrichtung nach Anspruch 1,
**dadurch gekennzeichnet,**
**dass** die Anordnung der Packtulpen (30) im Packkopf (21, 22) zu der Ausgestaltung des Gefachtyps des Flaschenkastens korreliert.

3. Sortiervorrichtung nach Anspruch 1,
**dadurch gekennzeichnet,**
**dass** die Packtulpen (30) der Packköpfe (21, 22) einzeln ansteuerbar sind.

4. Sortiervorrichtung nach Anspruch 1,
**dadurch gekennzeichnet,**
**dass** die Packtulpen (30) zur Aufnahme und zum Absetzen der Flaschen einzeln vertikal verfahrbar sind.

## Claims

1. A sorting apparatus for sorting bottles of different types from bottle cases of different compartmentation types,
- e.g. from cases holding 20 and 24 bottles (20 bottle or 24 bottle compartmentation type,
- said sorting apparatus including at least one supplying (2, 3) and at least one evacuating case path (2a, 3a)
- as well as one bottle storage (4),
- a gripper mechanism (20) for picking bottles up and for setting them down and which is movable relative to the case path being provided for sorting bottles of different types,
- said gripper mechanism (20) incorporating at least two different grippers (21, 22),
- each gripper (21, 22) comprising a number of gripper heads (30) corresponding to the compartmentation type,
**characterized in**
**that** said gripper mechanism (20) is fastened to a frame (10, 11), which is movable in at least two directions in space, said frame being disposed above said case path (2, 3), both the case paths and the bottle storage being accessible for said gripper mechanism (20).

2. The sorting apparatus as set forth in claim 1,
**characterized in**
**that** the arrangement of the gripper heads (30) in the gripper (21, 22) correlates with the design of the compartmentation type of the bottle case.

3. The sorting apparatus as set forth in claim 1,
**characterized in**
**that** the gripper heads (30) of the grippers (21, 22) are controllable one by one.

4. The sorting apparatus as set forth in claim 1,
**characterized in**
**that** the gripper heads (30) are displaceable vertically one by one for picking the bottles up and for setting them down.

## Revendications

1. Dispositif de tri de bouteilles de différentes sortes contenues dans des caisses de bouteilles compartimentées de différentes façons,
- par exemple dans des caisses de 20 et de 24 bouteilles (compartimentées pour 20 bouteilles ou pour 24 bouteilles),
- le dispositif de tri comprenant au moins un tapis d'acheminement (2, 3) et au moins un tapis d'évacuation (2a, 3a) des caisses
- ainsi qu'un accumulateur de bouteilles (4),
- un système de préhension (20) mobile par rapport au tapis et destiné à saisir et à déposer les bouteilles étant prévu pour trier des bouteilles de différentes sortes,
- le système de préhension (20) comprenant au moins deux têtes de préhension (21, 22) différentes,
- chaque tête de préhension (21, 22) comportant un nombre de boucles de décaisseuse (30) correspondant au type de caisse,
**caractérisé en ce**
**que** le système de préhension (20) est fixé sur un bâti (10, 11) mobile dans au moins deux directions dans l'espace, ce bâti étant disposé au-dessus du tapis (2, 3), les tapis comme l'accumulateur de bouteilles étant accessibles au système de préhension (20).

2. Dispositif de tri selon la revendication 1,
**caractérisé en ce**
**que** la disposition des boucles de décaisseuse (30) dans la tête de préhension (21, 22) est en corrélation avec la forme des compartiments de la caisse de bouteilles.

3. Dispositif de tri selon la revendication 1,
**caractérisé en ce**
**que** les boucles de décaisseuse (30) des têtes de préhension (21, 22) sont aptes à être commandées une à une.

4. Dispositif de tri selon la revendication 1,
**caractérisé en ce**
**que** les boucles de décaisseuse (30) sont aptes à être déplacées verticalement une à une pour saisir et pour déposer les bouteilles.
